# EUROPEAN PATENT APPLICATION

(11) **EP 2 781 383 A1**
(43) Date of publication of application: **24.09.2014**
(21) Application number: 13195757.3
(22) Date of filing: 04.12.2013
(51) Int. Cl.: B60H 3/06, B64D 13/06, B64D 13/08, F24F 12/00

(54) **Air conditioning system**

(30) Priority: 22.03.2013 GB 201305312
(71) Applicant: Honeywell Aerospace BV, 1101 EA Amsterdam (NL); Honeywell UK Limited, Bracknell Berkshire RG12 1EB (GB)
(72) Inventor: Sampson, Bernard Francis, Yeovil, Somerset BA20 2WB (GB); Marsh, Andrew Paul, Yeovil, Somerset BA20 2WB (GB)
(74) Representative: Ashton, Timothy

(57) **Abstract**

An air conditioning system 10 for conditioning supply air for use in an apparatus or cabin
a first apparatus 14 for heating air flowing therethrough, a first heat exchanger 20; a second heat exchanger 22; and
a third heat exchanger 24; wherein each heat exchanger includes first and second in- and outputs,
wherein the system is arranged such that:
the first input 20a of the first heat exchanger 20 is connectable to an air supply;
the first output 20b of the first heat exchanger is connected to the first input 22a of the second heat exchanger 22;
the first output 22b of the second heat exchanger is connected to the input of the first apparatus 14;
the output of the first apparatus 14 is connected to the second input 24c of the third heat exchanger 24;
the second output 24d of the third heat exchanger 24 is connected to the second input 20c of the first heat exchanger 20;
the second output 20d of the first heat exchanger 20 is connectable to a second apparatus 12 or cabin
the first output 24b of the third heat exchanger 24 is connected to the second input 22c of the second heat exchanger 22;
and wherein the system includes:
a branched flow path 26 in between the first heat exchanger 20 and the second heat exchanger 22which is connected to the first input 24a of the third heat exchanger 24.

## Description

### Description of Invention

This invention relates particularly to an air conditioning system. More particularly, but not exclusively, this invention relates to an air conditioning system for a vehicle such as a land based vehicle or aircraft.

Air conditioning systems supply air to habitable spaces at a desirable temperature for occupants of those spaces. In certain applications, air must be supplied to a habitable space after being treated in a catalytic converter. The air supplied to the catalytic converter must be conditioned, typically by raising it to a required temperature, before it can be treated. The air conditioning system is therefore arranged to add heat to the air before treatment by the catalytic converter. However, the air treated by the catalytic converter is not at a suitable temperature for supplying to the habitable space. Thus, the added heat must be removed from the air, by cooling the air, typically through the use of one or more heat exchangers, before the air can be supplied to the habitable space.

The above described process of heating/cooling the air is not desirable for systems in which there is a restriction to both the amount of heat/cooling that can be supplied to heat/cool the air and on the availability of the energy required to do this from external power sources.

Heat exchangers have a hot air flow path and a cool air flow path which are physically separate from one another. During use heat is transferred from heated air flowing along the hot air flow path to cool air flowing along the cool air flow path. However, leakage of air therebetween may occur meaning that air from the respective flow paths may mix. It is undesirable for treated air passing through a heat exchanger to become contaminated with air that has not been treated.

In accordance with a first aspect of the invention we provide an air conditioning system for conditioning supply air for use in an apparatus downstream of the air conditioning system which includes:
a first apparatus for heating air flowing therethrough, said first apparatus including an input for receiving relatively cool air and an output for heated air;
a first heat exchanger;
a second heat exchanger; and
a third heat exchanger; and
wherein each heat exchanger includes:
   a first input for receiving relatively cool air, a first output for said relatively cool air and a relatively cool air flow path therebetween; and
   a second input for receiving relatively hot air, a second output for said relatively hot air, and a relatively hot air flow path therebetween;
      wherein each heat exchanger is configured to transfer heat from the hot air passing through the relatively hot air flow path to the cool air passing through the relatively cool air flow path, and
      wherein the system is arranged such that:
the first input of the first heat exchanger is connectable to an air supply;
the first output of the first heat exchanger is connected to the first input of the second heat exchanger;
the first output of the second heat exchanger is connected to the input of the first apparatus;
the output of the first apparatus is connected to the second input of the third heat exchanger ;
the second output of the third heat exchanger is connected to the second input of the first heat exchanger;
the second output of the first heat exchanger is connectable to a second apparatus, namely the apparatus downstream of the air conditioning system;
the first output of the third heat exchanger is connected to the second input of the second heat exchanger;
and wherein the system includes:
   a branched flow path in between the first heat exchanger and the second heat exchanger which is connected to the first input of the third heat exchanger.

In accordance with a second aspect of the invention we provide a method of conditioning supply air for use in an apparatus downstream of an air conditioning system, the system including at least three heat exchangers, and the method including:
heating the supply air at first and second heat exchangers;
supplying the air to a first apparatus;
heating the air in the first apparatus;
cooling the air from the first apparatus at the third and first heat exchangers; and
supplying the air to a second apparatus, namely the apparatus downstream of the air conditioning system.

Further features of the various aspects of the invention are set out in claims 2 to 25 appended hereto.

Embodiments of the invention will now be described, by way of example only, with reference to the accompanying drawing, of which:
Fig. 1 is a diagram of a first embodiment of an air conditioning system of the present invention; and
Fig.2 is a diagram of a second embodiment of an air conditioning system of the present invention.

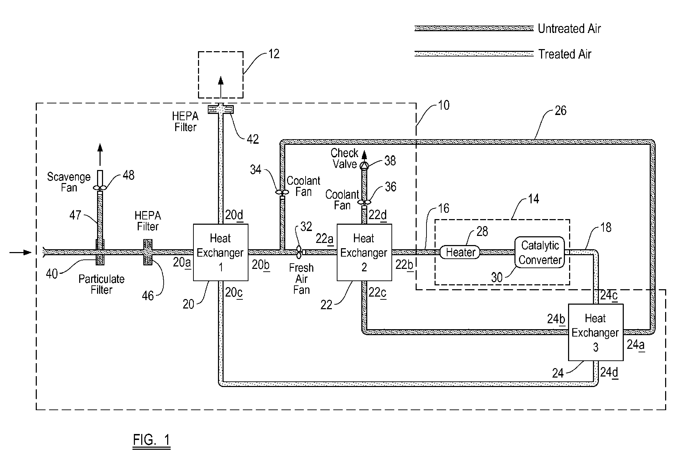

Referring to Figure 1, this shows an air conditioning system 10 for a vehicle. The air conditioning system 10, when in use, conditions supply air for use in an apparatus 12 (shown in dashed lines) downstream of the air conditioning system 10. The air conditioning system 10 includes a first apparatus 14 (shown in dashed lines) for heating air flowing therethrough. The first apparatus 14 includes an input 16 for receiving relatively cool air and an output 18 for heated air. The air conditioning system 10 includes a first heat exchanger 20, a second heat exchanger 22, and a third heat exchanger 24. The first, second and third heat exchanger 20, 22, 24 each include a respective first input 20a, 22a, 24a for receiving relatively cool air, a respective first output 20b, 22b, 24b for the relatively cool air and a relatively cool air flow path therebetween. The heat exchangers 20, 22, 24 also have a respective second input 20c, 22c, 24c for receiving relatively hot air, a respective second output 20d, 22d, 24d for said relatively hot air, with a relatively hot air flow path therebetween. Each heat exchanger 20, 22, 24 is configured to transfer heat from the hot air passing through the relatively hot air flow path to the cool air passing through the relatively cool air flow path.

The air conditioning system 10 is arranged such that the first input 20a of the first heat exchanger 20 is connectable to an air supply and the first output 20b of the first heat exchanger 20 is fluidly connected to the first input 22a of the second heat exchanger 22. The first output 22b of the second heat exchanger 22 is fluidly connected to the input 16 of the first apparatus 14. The output 18 of the first apparatus 14 is fluidly connected to the second input 24c of the third heat exchanger 24. The second output 24d of the third heat exchanger 24 is fluidly connected to the second input 20c of the first heat exchanger 20. The second output 20d of the first heat exchanger 20 is connectable to a second apparatus (e.g. a habitable space), namely the apparatus 12 downstream of the air conditioning system 10. The first output 24b of the third heat exchanger 24 is connected to the second input 22c of the second heat exchanger 22. The air conditioning system 10 further includes a branched flow path 26 from the path connecting the first heat exchanger 20 to the second heat exchanger 22 which is connected to the first input 24a of the third heat exchanger 24.

The terms "relatively hot air flow path" and "relatively cool air path" are to indicate that, in normal operation, the air flowing along the relative hot air flow path is at a higher temperature than the air flowing along the relatively cool air flow path of a heat exchanger. The temperature of the air of the relatively hot air flow path of one heat exchanger is thus not necessarily at the same temperature as the air of a relatively hot air flow path of one of the other heat exchangers.

In this embodiment, the first apparatus 14 includes a heater 28 for heating air flowing therethrough for use by a catalytic converter 30. The catalytic converter 30 is situated downstream of the heater 28 and is fluidly connected to the output 18 of the first apparatus 14.

The second apparatus 12 may include any enclosure, for example, a habitable space in the form of a vehicle cabin and/or a housing for electronic components, that requires a supply of conditioned air to maintain habitable/operable conditions in that space within a desired range.

The air conditioning system 10 operates to condition the supply air by warming the supply air before it is supplied to the heater 28 of the first apparatus 14, and subsequently cooling the air before it is passed to the second apparatus 12.

The air conditioning system 10 includes a series of conduits in the form of pipes that connect the system components together and thus provide the above mentioned fluid paths. Situated within the conduits are air movers for moving air through the conduits during use. A suitable air mover may be a fan, for example. Air mover 32 is situated between the first heat exchanger 20 and the second heat exchanger 22 for moving air therebetween. Air mover 34 is situated upstream of the first input 24a of the third heat exchanger 24 in the branched flow path 26 for moving air towards the third heat exchanger 24. Air mover 36 is situated downstream of the second output 22d of the second heat exchanger 22 for moving air through the second heat exchanger 22. Although the present embodiment includes air mover 34 and air mover 36, in alternative embodiments the air conditioning system could include either the air mover 34 or the air mover 36. Also situated downstream of the second output 22d is an exhaust valve 38. The exhaust valve 38 may be a check valve. As will be described, the air that flows through the branched flow path 26 is ultimately exhausted to atmosphere via the check valve 38, whilst the air outputted from the first apparatus 14 is ultimately supplied to the second apparatus 12.

The air conditioning system 10 includes a filter 40 situated upstream of the first input 20a of the first heat exchanger 20. The filter 40 may be a particulate filter to filter the air before it is drawn into the system. A further branched flow path 47 is provided that is connected at one end to the filter 40 and the other end of which is in communication with atmosphere. Air mover 48 is provided in the further branched flow path 47 for removing any particles removed by the filter 40 from the supply air to atmosphere.

The air conditioning system 10 also includes a HEPA filter 46 positioned downstream of the filter 40 and upstream of the first input 20a of the first heat exchanger 20.

The air conditioning system 10 also includes a filter 42 situated downstream of the second output 20d of the first heat exchanger 20. The filter 42 may be a High-Efficiency Particulate Air (HEPA) filter to ensure the quality of air being provided to the second apparatus 12.

The effect of operation of the air conditioning system 10 on the supply air will now be described.

During use the supply air is received at the first input 20a of the first heat exchanger 20. The supply air passes along the relatively cool air flow path and is heated as it crosses the hot air passing through the relatively hot air flow path. The heated supply air leaves the first output 20b of the first heat exchanger and travels along two paths. The first path is from the first output 20b of the first heat exchanger 20 to the first input 22a of the second heat exchanger 22. The second path is the branched flow path 26 to the first input 24a of the third heat exchanger 24.

The air mover 32 moves the air which has been heated by the first heat exchanger 20 along this path towards the second heat exchanger 22. The heated air passes along the relatively cool air flow path of the second heat exchanger 22 and is heated as it crosses the relatively hot air flow path of the second heat exchanger 22. The air is thus heated twice, at the first and second heat exchangers 20, 22, respectively by recovering heat from the air moving along the respective relatively hot air flow paths, before the supply air is received at the input 16 of the first apparatus 14. An effect of the air mover 32 is that the air is compressed through the conduit before it reaches the second heat exchanger 22. The pressure of the air is thus increased due to the presence of the air mover 32.

The air is then heated by the heater 28 to a required temperature for the catalytic converter 30, where it is treated. The air then passes from the output 18 of the first apparatus 14 to the second input 24c of the third heat exchanger 24. In an alternative embodiment, the output 18 of the first apparatus 14 may be directly from the catalytic converter 30.

The treated air from the catalytic converter is at an elevated temperature that is not suitable for supplying to the second apparatus 12. The treated air must therefore be cooled before it can be supplied to the second apparatus 12.

The air that is outputted from the first apparatus 14 passes to the relatively hot air flow path of the third heat exchanger 24 and crosses the air passing along the relatively cool air flow path of the third heat exchanger 24. The air for supplying to the second apparatus 12 is thus cooled and leaves output 24d of the third heat exchanger 24.

Once the air has been outputted from the output 24d of the third heat exchanger 24 it is received at the second input 20c of the first heat exchanger 20. The treated air outputted from output 24d flows from input 24c to 24d, and is at a higher pressure than the untreated air passing from input 24a to output 24b of the third heat exchanger 24. This is because of the effect of air mover 32 compressing the air before it is treated. This is advantageous as it means that any leakage of air is only going to occur from the high(er) pressure treated air to the low(er) pressure untreated air. Hence, substantially no contamination of the treated air occurs since the untreated air will not pass into it because it is at a lower pressure. The treated air passes along the relatively hot air flow path of the first heat exchanger 20 and crosses the supply air that is passing along the relatively cool air flow path of the first heat exchanger 20. The air for supplying to the second apparatus 12 is thus cooled as it passes through the first heat exchanger 20, having heated the supply air, and is at a suitable temperature for supplying to the second apparatus 12. The air that was heated in the first apparatus 14 has therefore been cooled twice, at the third and first heat exchangers 24, 20 respectively, before being supplied to the second apparatus 12.

Similarly, the treated air received at input 20c and outputted at output 20d is at a higher pressure than the untreated air received at input 20a and outputted at output 20b. Thus, leakage will only occur in the direction of treated to untreated air. This means that the air supplied to the second apparatus 12 is assured to be substantially free of any contamination, i.e. untreated air.

The air that is outputted from the output 24b of the third heat exchanger 24 is received at the second input 22c of the second heat exchanger 22. The air passes along the relatively hot air flow path of the second heat exchanger 22 and crosses the air passing along the relatively cool air flow path. The air that will be exhausted to atmosphere is therefore used to further heat the air being supplied to the first apparatus 14 before it is exhausted. The air is therefore heated twice, at the first and second heat exchangers 20, 22, before it is received at the first apparatus 14.

Advantageously, the heat removed from the air after passing through the catalytic converter 30 is used to warm the air that is supplied to the first apparatus thus making overall energy efficiency savings. This is because the heater 28 is not required to heat the air to the degree that would otherwise be required to raise it to the required temperature for treatment by the catalytic converter 30. Furthermore, due to the way in which the branched flow path has been arranged, the air mover 32 operates on air which is at a lower temperature than prior art systems meaning specialist high temperature fans or equipment are not required to move the air. This is advantageous as the specialist equipment requires complex design consideration and high cost whereas the system of the present invention can operate with standard equipment that is widely available.

The improved efficiency of the system means that it consumes a low amount of power during operation. This is advantageous, particularly for applications that have limited supply and availability of power.

The design of the system in its placement of air movers and heat exchangers also ensures that no contamination of the treated air can occur due to leakages at the heat exchangers. The system is arranged such that any leakages are only from treated to untreated air, by virtue of the relative pressures in the hot and cool air flow paths.

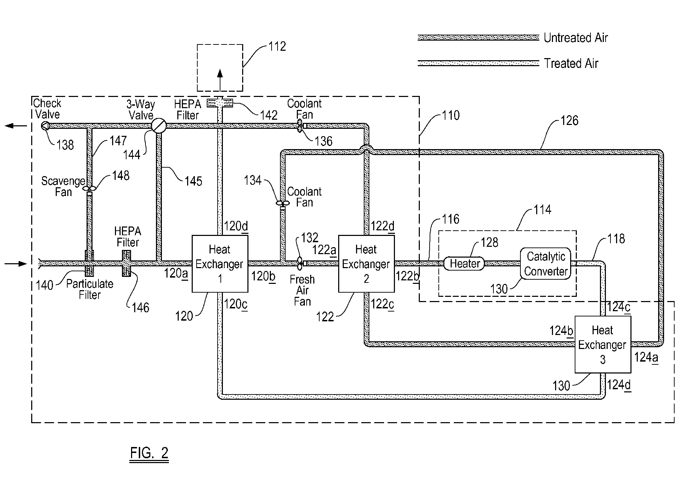

Referring to Figure 2, this shows an air conditioning system 110 in accordance with a second embodiment of the invention. Features in common with the first embodiment share the same reference numeral with the addition of 100.

Air conditioning system 110 differs from the first embodiment firstly in that there is a further branched flow path 145 that connects the second output 122d of the second heat exchanger 122 to the first input 120a of the first heat exchanger 120 so as to permit air to flow therebetween. Thus, air from the output 122d can be recycled into the system. The air conditioning system 110 includes a flow director 144 positioned downstream of the second output 122d of the second heat exchanger 122 and upstream of the first input 120a of the first heat exchanger 120. Exhaust valve 138 is positioned downstream of the second output 122d of the second heat exchanger 122 and the flow director 144. The flow director 144 can adjust the amount of air which is permitted to flow via the branched flow path 145 from the second heat exchanger 122 to the first heat exchanger 120, and the amount of air which flows from the second heat exchanger 122 to the exhaust valve 138. In this embodiment the flow director 144 is a three-way valve. However, other devices could be used. All that is required is that the flow director 144 can increase or decrease the amount of air flowing from the second output 122d of the second heat exchanger 122 towards the first input 120a of the first heat exchanger 120. The air conditioning system includes an air temperature sensing means and control means (not shown) for adjusting the operation of the flow director 144.

The air conditioning system 110 also includes a HEPA filter 146 positioned downstream of the particulate filter 140 and upstream of the first input 120a of the first heat exchanger 120.

A further branched flow path 147 is provided downstream of the second output 122d of the second heat exchanger 122. One end of the branched flow path 147 is positioned between the flow director 144 and the exhaust valve 138, and the other end is positioned upstream of the first heat exchanger 120 and the HEPA filter 146, and is connected to the particulate filter 140. Positioned within the branched flow path 147 is an air mover 148 for removing any particles removed by the particulate filter 140 from the supply air to atmosphere.

During operation, the air temperature sensing means measures the ambient air temperature. On days where the ambient air is extremely low, the control means is arranged to adjust the flow director 144 so that all of the air flowing from the output 122d of the second heat exchanger 122 is diverted (e.g. recycled) back through the system 110 to the first heat exchanger 120. This air from the second heat exchanger 122 is relatively hot (compared with ambient) and when it mixes with the incoming fresh supply air upstream of the first heat exchanger 120 the temperature of the supply air is increased. This means that the system does not require as much energy to increase the supply air temperature to that required by the catalytic converter 130. Similarly, on hot days all of the air flowing from the output 122d of the second heat exchanger 122 is discharged by the flow director 144 to ambient via the exhaust valve 138, so as not to overheat the supply air.

On days where the ambient air temperature is between these extremes, the control means adjusts the flow director 144 so that part of the air from the output 122d of the second heat exchanger 22 passes through the exhaust valve 138, and the remainder of the air is directed to the first heat exchanger 120. This reduces the amount of energy discharged through the exhaust check valve 138 and instead uses it to raise the temperature of the air supplied to the air conditioning system.

In this arrangement the system is configured to adjust the flow director according to the sensed ambient temperature to obtain a desired temperature of air for supply to the first or second apparatus. The flow director 144 thus permits a further reduction in the power required to operate the system 110 to condition air for use by the second apparatus 112 by taking account of the hot or cold ambient weather conditions.

In other embodiments the setting of the flow director 144 could be based on sensing the temperature of the air within any part of the system, in addition to or instead of the ambient air temperature. For example the sensing means could be configured to sense the temperature of the air passing from the first heat exchanger towards the second heat exchanger. Alternatively, the sensing means could sense the temperature of the air supplied to, or the air within, the first and/or second apparatus.

In the described embodiments of the invention the first, second and third heat exchangers are single pass cross-flow heat exchangers or multi-pass cross-contra flow heat exchangers. However, in an alternative embodiment only the second and third heat exchangers are multi-pass cross-contra flow heat exchangers.

The present invention may be used for supply air to a second apparatus having an enclosure that includes more than one space, for example, a habitable space such as a vehicle cabin, and a housing for electronic components. The second apparatus can be any type of apparatus that requires a supply of treated air. The cooled air could be used to maintain a temperature within the second apparatus within a desired temperature range.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air conditioning system for conditioning supply air for use in an apparatus downstream of the air conditioning system, including:
a first apparatus for heating air flowing therethrough, said first apparatus including an input for receiving relatively cool air and an output for heated air;
a first heat exchanger;
a second heat exchanger; and
a third heat exchanger; and
wherein each heat exchanger includes:
a first input for receiving relatively cool air, a first output for said relatively cool air and a relatively cool air flow path therebetween; and
a second input for receiving relatively hot air, a second output for said relatively hot air, and a relatively hot air flow path therebetween;
wherein each heat exchanger is configured to transfer heat from the hot air passing through the relatively hot air flow path to the cool air passing through the relatively cool air flow path,
wherein the system is arranged such that:
the first input of the first heat exchanger is connectable to an air supply;
the first output of the first heat exchanger is connected to the first input of the second heat exchanger;
the first output of the second heat exchanger is connected to the input of the first apparatus;
the output of the first apparatus is connected to the second input of the third heat exchanger ;
the second output of the third heat exchanger is connected to the second input of the first heat exchanger;
the second output of the first heat exchanger is connectable to a second apparatus, namely the apparatus downstream of the air conditioning system;
the first output of the third heat exchanger is connected to the second input of the second heat exchanger;
and wherein the system includes:
a branched flow path in between the first heat exchanger and the second heat exchanger which is connected to the first input of the third heat exchanger.

2. An air conditioning system according to claim 1 including an air mover positioned in between the first heat exchanger and the second heat exchanger for moving air therebetween.

3. An air conditioning system according to claim 1 or 2 including an air mover positioned upstream of the first input of the third heat exchanger in the branched flow path for moving air through the branched flow path.

4. An air conditioning system according to claim 1, 2 or 3 including an air mover positioned downstream of the second output of the second heat exchanger for moving air through the second heat exchanger.

5. An air conditioning system according to any preceding claim wherein the first apparatus includes a heater for heating air flowing therethrough.

6. An air conditioning system according to any preceding claim wherein the first apparatus includes a catalytic converter for treating the air passing therethrough, and preferably the catalytic converter is situated downstream of the heater and the output of the first apparatus is, or is connected to, the output of the catalytic converter.

7. An air conditioning system according to any preceding claim including a further branched flow path that connects the second output of the second heat exchanger to the first input of the first heat exchanger so as to permit fluid to flow therebetween, and preferably a flow director positioned downstream of the second output of the second heat exchanger and upstream of the first input of the first heat exchanger; wherein the flow director adjusts the amount of air which is permitted to flow from the second heat exchanger to the first heat exchanger.

8. An air conditioning system according to claim 7 including air temperature sensing means for sensing the temperature of the ambient air entering the system, air within a part of the system, or air supplied to or in the first and/or second apparatus, and control means for adjusting the operation of the flow director according to the sensed temperature, and preferably the air temperature sensing means is configured to sense the temperature of air passing from the first heat exchanger towards the second heat exchanger, and/or the ambient air temperature.

9. An air conditioning system according to claim 8 wherein the flow director is a three-way valve.

10. An air conditioning system according to any one of claims 1 to 7 including an exhaust valve, preferably a check valve, positioned downstream of the second output of the second heat exchanger.

11. An air conditioning system according to any one of claims 7 to 9 including an exhaust valve, preferably a check valve, positioned downstream of the second output of the second heat exchanger and downstream of the flow director.

12. An air conditioning system according to any preceding claim including a filter, preferably a particulate filter, positioned upstream of the first input of the first heat exchanger.

13. An air conditioning system according to any preceding claim including a filter, preferably a HEPA filter, positioned downstream of the second output of the first heat exchanger, and/or a HEPA filter positioned upstream of the first input of the first heat exchanger.

14. An air conditioning system according to any preceding claim wherein:
a) third heat exchangers are single pass cross-flow heat exchangers, or multi-pass cross-contra flow heat exchangers, or
b) the first heat exchanger is a single pass cross-flow heat exchanger, and the second and third heat exchangers are multi-pass cross-contra flow heat exchangers.

15. A method of conditioning supply air for use in an apparatus downstream of an air conditioning system, the system including at least three heat exchangers, and the method including:
heating the supply air at first and second heat exchangers;
supplying the air to a first apparatus;
heating the air in the first apparatus;
cooling the air from the first apparatus at the third and first heat exchangers; and
supplying the air to a second apparatus, namely the apparatus downstream of the air conditioning system.
